(19) Europäisches Patentamt
European Patent Office
Office européen des brevets

(11) **EP 2 862 714 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(21) Anmeldenummer: **14003418.2**

(22) Anmeldetag: **02.10.2014**

(51) Int Cl.:
*B32B 27/36* (2006.01)   *B32B 27/08* (2006.01)

(54) **Mehrlagige Schrumpffolie aus Polyester mit verbesserten Verarbeitungseigenschaften**

Multilayer polyester shrink film with improved processing properties

Film multicouche thermo-rétractable à base de polyester ayant des propriétés de traitement améliorées

(84) Benannte Vertragsstaaten:
**AT BE CH DE ES FI FR GB IE IT LI LU MC NL NO PL PT SE TR**

(30) Priorität: **10.10.2013 DE 102013016857**

(43) Veröffentlichungstag der Anmeldung:
**22.04.2015 Patentblatt 2015/17**

(73) Patentinhaber: **Klöckner Pentaplast GmbH**
**56412 Heiligenroth (DE)**

(72) Erfinder:
• **Schrauf, Roland**
**84524 Neuötting (DE)**
• **Dux, Christan**
**84577 Tüssling (DE)**
• **Steuck, Gerhard**
**84307 Eggenfelden (DE)**
• **Deiringer, Günther**
**84556 Kastl (DE)**

(74) Vertreter: **Plate, Jürgen et al**
**Plate Schweitzer Zounek**
**Patentanwälte**
**Rheingaustrasse 196**
**65203 Wiesbaden (DE)**

(56) Entgegenhaltungen:
EP-A1- 1 876 019     WO-A1-2013/056011
DE-A1-102007 018 182

## Beschreibung

Die vorliegende Erfindung betrifft eine Folie, umfassend eine erste und zweite äußere Lage und eine dritte Lage, die zwischen der ersten und zweiten Lage angeordnet ist, wobei die erste, zweite und dritte Lage unabhängig voneinander jeweils aus einem ersten, zweiten und dritten Copolyester mit einem Anteil von größer 30 Gew.-% bezogen auf das Gesamtgewicht der Lage und gegebenenfalls einem oder mehreren anderen Polymeren sowie Additiven besteht.

Mehrlagige Polyesterfolien sind im Stand der Technik bekannt.

Die US 5,484,632 beschreibt eine unverstreckte mehrlagige Folie, umfassend eine erste Lage aus amorphem, kristallisierbarem Polyethylenterephthalat mit einem Schmelzpunkt von über 238 °C und einer Schmelzenthalpie von etwa 9 cal/g sowie eine zweite Lage aus amorphem, heißsiegelbarem Polyester, der im Wesentlichen aus Monomereinheiten aus Terephthalsäure, etwa 85-93 Mol-% Ethylenglycol und etwa 15-7 Mol-% Cyclohexandimethanol besteht und eine Schmelzenthalpie von größer als 0,5 cal/g aufweist, wobei die Dicke der zweiten Lage weniger als 50 % der Gesamtdicke der Folie beträgt.

Die US 5,968,666 offenbart eine Folie mit mindestens sieben Lagen, umfassend erste und dritte Lagen sowie eine zweite Lage, die zwischen der ersten und dritten Lage angeordnet ist, einen Terephthalsäurepolyester umfasst und in mindestens einer Richtung mit einem Streckgrad orientiert ist, der höher ist als der Streckgrad, der unter gleichen Streckbedingungen mit einer monolithischen Folie aus Terephthalsäurepolyester erzielt wird. Vorzugsweise enthalten die erste und/oder dritte Lage einen Polyethylennaphthalatpolyester.

Wegen der im Vergleich zu PVC günstigeren thermischen und optischen Eigenschaften werden bestimmte Polyestersorten seit einigen Jahren vermehrt als Werkstoff für Verpackungs- und Schrumpffolien eingesetzt. Für Schrumpffolien hat sich insbesondere ein halbkristalliner oder amorpher Polyester des Typs Embrace® oder Embrace® LV von Eastman Chemical Company bewährt, wobei neben Terephthalsäure und Ethylenglykol als Comonomer eine CHDM-Glykolkomponente verwendet wird. Schrumpffolien aus der Polyestergruppe Embrace® weisen ein Schrumpfverhalten auf, das dem von Schrumpffolien aus PVC näherungsweise gleicht. Bei auf der Polyestergruppe Embrace® basierenden Schrumpffolien kann durch die gezielte Einstellung der Prozessparameter und/oder Beimischung von Modifikatoren die Schrumpfkurve, die den Schrumpf in Abhängigkeit von der Temperatur beschreibt, innerhalb gewisser Grenzen an die Erfordernisse der Anwender angepasst werden. So kann z.B. eine auf Embrace® LV basierende Schrumpffolie derart eingestellt werden, dass ihre Schrumpfkurve einen im Vergleich zu gewöhnlichem Copolyester des Typs PET-G, wie beispielsweise PETG 6763 von Eastman Chemical Company, deutlich flacheren Verlauf sowie eine erheblich kleinere Schrumpfspannung aufweist.

Im Rahmen von großvolumigen Versuchen in industriellem Maßstab mit Schrumpfetiketten auf Basis von CHDM-Glykolmodifizierten Polyestern haben die Erfinder der vorliegenden Anmeldung eine Fehler- bzw. Ausschussrate von einigen Prozent festgestellt. Eine Vielzahl der auf besagten Polyestern basierten Schrumpffolien und daraus hergestellten Schrumpfetiketten verursachen Probleme in der Verarbeitung, respektive weisen Mängel im Druckbild auf. Nach einer eingehenden Fehleranalyse wurden mehrere Ursachen identifiziert:

- Verblocken der Schrumpffolie beim Abwickeln im Anschluss an eine Druckvorbehandlung mittels Coronaentladung. Diese Verblockungsprobleme führen zu weißlichen Oberflächenaufrissen/-markierungen, die nachfolgend als "Blocking" oder "Ghosting" bezeichnet werden. Blocking- bzw. Ghosting-Defekte sind auch nach dem Bedrucken sichtbar und verursachen zudem in ungünstigen Fällen beim Abwickeln Bahnrisse;

- unkontrollierter Schrägverzug der Folie beim Schrumpfen, nachfolgend als "Twist" oder "Bowing" bezeichnet; und

- vereinzelt auftretende unzureichende Haftung der Klebenaht; die Klebenaht wird beim Verkleben der Schrumpffolie zu einem Schlauch mittels Lösemittel erzeugt.

Die vorliegende Erfindung hat die Aufgabe, eine Schrumpffolie bereitzustellen, die

- im Wesentlichen aus Polyester besteht;

- ein Schrumpfverhalten ähnlich dem von Schrumpffolien aus PVC aufweist; und

- im Weiterverarbeitungsprozess eine Fehler- und Ausschussrate von weniger als 1 % hat.

Diese Aufgabe wird gelöst durch eine Folie, umfassend eine erste und zweite äußere Lage und eine dritte Lage, die zwischen der ersten und zweiten Lage angeordnet ist, wobei die erste, zweite und dritte Lage unabhängig voneinander jeweils aus einem ersten, zweiten und dritten Copolyester mit einem Anteil von größer 30 Gew.-% bezogen auf das Gesamtgewicht der Lage und gegebenenfalls einem oder mehreren anderen Polymeren sowie Additiven besteht, und

- der erste Copolyester aus Disäureresten und Diolresten aufgebaut ist, mindestens 80 Mol-% der Disäurereste Terephthalsäurereste sind und die Diolreste 70 bis 95 Mol-% Ethylenglykolreste und 5 bis 20 Mol-% Neopentylglykolreste (NPG) umfassen;

- der zweite Copolyester aus Disäureresten und Diolresten aufgebaut ist, mindestens 80 Mol-% der Disäurereste Terephthalsäurereste sind und die Diolreste 70 bis 95 Mol-% Ethylenglykolreste und 5 bis 20 Mol-% Neopentylglykolreste (NPG) umfassen; und

- der dritte Copolyester aus Disäureresten und Diolresten aufgebaut ist, mindestens 80 Mol-% der Disäurereste Terephthalsäurereste sind und die Diolreste 60 bis 90 Mol-% Ethylenglykolreste und 10 bis 35 Mol-% 1,4-Cyclohexandimethanolreste (CHDM) umfassen.

Vorteilhafte Weiterbildungen der erfindungsgemäßen Folie sind dadurch gekennzeichnet, dass:

- der Anteil des ersten Copolyesters in der ersten Lage, der Anteil des zweiten Copolyesters in der zweiten Lage und der Anteil des dritten Copolyesters in der dritten Lage unabhängig voneinander mehr als 50 Gew.-% bezogen auf das Gesamtgewicht der jeweiligen Lage beträgt;

- der Anteil des ersten Copolyesters in der ersten Lage, der Anteil des zweiten Copolyesters in der zweiten Lage und der Anteil des dritten Copolyesters in der dritten Lage unabhängig voneinander mehr als 70 Gew.-% bezogen auf das Gesamtgewicht der jeweiligen Lage beträgt;

- die Diolreste des ersten Copolyesters einen Anteil von 10 bis 20 Mol-% Neopentylglykolreste (NPG) aufweisen;

- der erste Copolyester halbkristallin oder amorph ist und eine Kristallisationshalbwertszeit im geschmolzenen Zustand von mindestens 5 Minuten aufweist;

- die Diolreste des zweiten Copolyesters einen Anteil von 10 bis 20 Mol-% Neopentylglykolreste (NPG) aufweisen;

- der zweite Copolyester halbkristallin oder amorph ist und eine Kristallisations-halbwertszeit im geschmolzenen Zustand von mindestens 5 Minuten aufweist;

- die Diolreste des dritten Copolyesters 15 bis 25 Mol-% 1,4-Cyclohexandimethanolreste (CHDM) umfassen;

- der dritte Copolyester halbkristallin oder amorph ist und eine Kristallisationshalbwertszeit im geschmolzenen Zustand von mindestens 5 Minuten aufweist;

- die Folie nach monoaxialer Verstreckung mit einem Streckgrad von 1,3 bis 6 eine Gesamtdicke von 20 bis 150 $\mu$m aufweist;

- die Dicke der dritten Lage 40 bis 94 % der Gesamtdicke der Folie beträgt;

- die Dicke der dritten Lage 60 bis 94 % der Gesamtdicke der Folie beträgt;

- die Dicke der dritten Lage 70 bis 94 % der Gesamtdicke der Folie beträgt;

- die Dicke der dritten Lage 80 bis 94 % der Gesamtdicke der Folie beträgt;

- die Folie monoaxial oder biaxial verstreckt ist mit einem Streckgrad von 1,3 bis 6 und bei einer Temperatur von 75 °C in Streckrichtung um 20 bis 80 % schrumpft, gemessen nach 30 Sekunden Schrumpfung in Wasser;

- die Folie monoaxial oder biaxial verstreckt ist mit einem Streckgrad von 1,3 bis 6 und bei einer Temperatur von 95 °C in Streckrichtung um 50 bis 85 % schrumpft, gemessen nach 30 Sekunden Schrumpfung in Wasser;

- die Folie monoaxial oder biaxial verstreckt ist mit einem Streckgrad von 1,3 bis 6 und bei einer Temperatur von 95 °C eine Schrumpfspannung von kleiner 12 MPa (N/mm$^2$) aufweist;

- die Folie monoaxial oder biaxial verstreckt ist mit einem Streckgrad von 1,3 bis 6 und bei einer Temperatur von 95 °C eine Schrumpfspannung von kleiner 8,5 MPa (N/mm$^2$) aufweist;

- die Folie monoaxial oder biaxial verstreckt ist mit einem Streckgrad von 1,3 bis 6 und in mindestens einer Streckrichtung einen Temperatur-Schrumpf-Verlauf S(T) aufweist mit

$$92{,}5 + T / (1 + 3{,}6 \cdot 10^{-4} \cdot T^2) \; < \; S(T) \; < \; 85{,}8 - 1763 / [23 + (T - 58{,}3)^2]$$

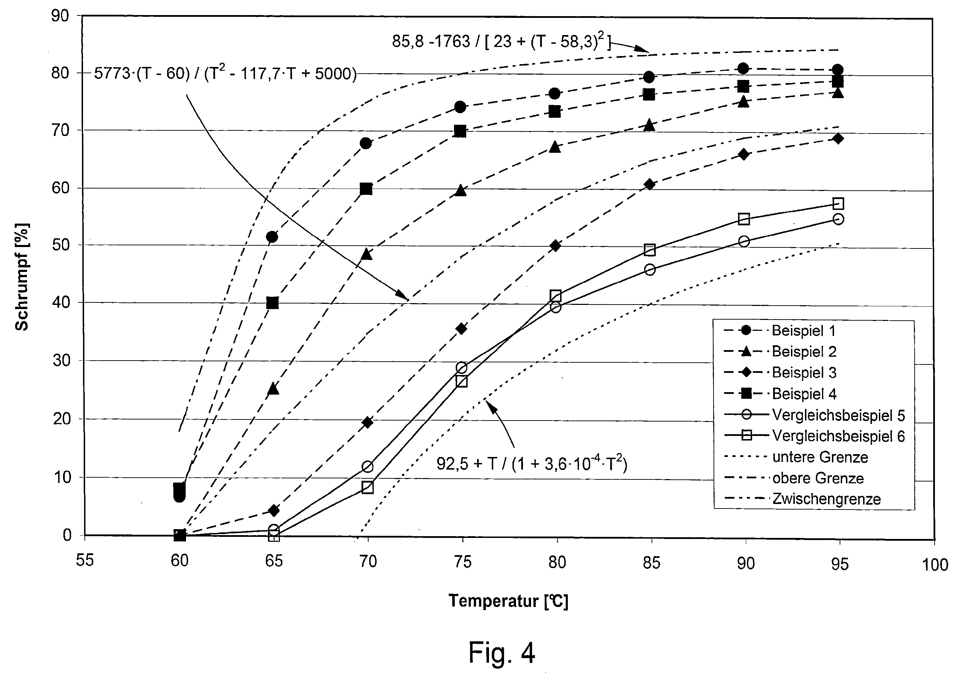

wobei S(T) den Schrumpf in Prozent (gemessen nach 30 Sekunden Schrumpfung in Wasser) und T die Temperatur in der Einheit °C bezeichnet (siehe Fig. 4);

- die Folie monoaxial oder biaxial verstreckt ist mit einem Streckgrad von 1,3 bis 6 und in mindestens einer Streckrichtung einen Temperatur-Schrumpf-Verlauf S(T) aufweist mit

$$92{,}5 + T / (1 + 3{,}6 \cdot 10^{-4} \cdot T^2) \; < \; S(T) \; < \; 5773 \cdot (T - 60) / (T^2 - 117{,}7 \cdot T + 5000)$$

wobei S(T) den Schrumpf in Prozent (gemessen nach 30 Sekunden Schrumpfung in Wasser) und T die Temperatur in der Einheit °C bezeichnet (siehe Fig. 4);

- die Folie monoaxial oder biaxial verstreckt ist mit einem Streckgrad von 1,3 bis 6 und in mindestens einer Streckrichtung einen Temperatur-Schrumpf-Verlauf S(T) aufweist mit

$$5773 \cdot (T - 60) / (T^2 - 117{,}7 \cdot T + 5000) \; < \; S(T) \; < \; 85{,}8 - 1763 / [23 + (T - 58{,}3)^2]$$

wobei S(T) den Schrumpf in Prozent (gemessen nach 30 Sekunden Schrumpfung in Wasser) und T die Temperatur in der Einheit °C bezeichnet (siehe Fig. 4);

- die Folie bei freier Schrumpfung in einem Wasserbad mit einer Temperatur von 95 °C und 15 Sekunden Schrumpfzeit einen Twistwinkel von kleiner 17 Grad, vorzugsweise kleiner 15 Grad und insbesondere kleiner 13 Grad aufweist, wobei der Twistwinkel gemäß der nachstehend beschriebenen Methode gemessen wird;

- die Folie in unverstrecktem und verstrecktem Zustand einen gemäß DIN EN ISO 8295 gemessenen Eigen-Haftreibungskoeffizienten von kleiner 0,7 und einen gemäß DIN EN ISO 8295 gemessenen Eigen-Gleitreibungskoeffizienten von kleiner 0,6 aufweist; und/oder

- die Folie ein- oder beidseitig mittels Coronaentladung behandelt ist.

In zweckmäßigen Ausführungsformen ist die erfindungsgemäße Folie zudem dadurch gekennzeichnet, dass:

- der Anteil des ersten Copolyesters in der ersten Lage mehr als 80 Gew.-% bezogen auf das Gesamtgewicht der ersten Lage beträgt;

- der Anteil des ersten Copolyesters in der ersten Lage mehr als 90 Gew.-% bezogen auf das Gesamtgewicht der ersten Lage beträgt;

- die erste Lage einen Copolyester enthält, der aus Disäureresten und Diolresten aufgebaut ist, wobei mindestens 80 Mol-% der Disäurereste Terephthalsäurereste sind und die Diolreste 60 bis 90 Mol-% Ethylenglykolreste und 10 bis 35 Mol-% 1,4-Cyclohexan-dimethanolreste (CHDM) umfassen;

- der Anteil des zweiten Copolyesters in der zweiten Lage mehr als 80 Gew.-% bezogen auf das Gesamtgewicht der zweiten Lage beträgt;

- der Anteil des zweiten Copolyesters in der zweiten Lage mehr als 90 Gew.-% bezogen auf das Gesamtgewicht der zweiten Lage beträgt;

- die zweite Lage einen Copolyester enthält, der aus Disäureresten und Diolresten aufgebaut ist, wobei mindestens 80 Mol-% der Disäurereste Terephthalsäurereste sind und die Diolreste 60 bis 90 Mol-% Ethylenglykolreste und 10 bis 35 Mol-% 1,4-Cyclohexandimethanolreste (CHDM) umfassen;

- der Anteil des dritten Copolyesters in der dritten Lage mehr als 80 Gew.-% bezogen auf das Gesamtgewicht der dritten Lage beträgt;

- der Anteil des dritten Copolyesters in der dritten Lage mehr als 90 Gew.-% bezogen auf das Gesamtgewicht der dritten Lage beträgt;

- die dritte Lage einen Copolyester enthält, der aus Disäureresten und Diolresten aufgebaut ist, wobei mindestens 80 Mol-% der Disäurereste Terephthalsäurereste sind und die Diolreste 70 bis 95 Mol-% Ethylenglykolreste und 5 bis 20 Mol-% Neopentylglykolreste (NPG) umfassen;

- die erste, zweite und/oder dritte Lage ein oder mehrere Additive, gewählt aus der Gruppe, umfassend Modifikatoren, UV-Absorber und Farbpigmente enthält;

- die erste und/oder die zweite Lage ein oder mehrere organische und/oder anorganische Antiblockmittel, wie Wachse, Öle, Silikatpartikel oder Talk enthalten;

- zwischen der ersten und dritten Lage eine Haftschicht angeordnet ist;

- zwischen der zweiten und dritten Lage eine Haftschicht angeordnet ist;

- die Folie in unverstrecktem Zustand eine Dicke von 50 bis 1200 $\mu$m aufweist;

- die Folie mit einem Streckgrad von 1,3 bis 5 verstreckt ist;

- die Folie in verstrecktem Zustand mit einem Streckgrad von 1,3 bis 5 eine Dicke von 20 bis 500 $\mu$m aufweist; und/oder

- die Folie in verstrecktem Zustand mit einem Streckgrad von 1,3 bis 5 eine Dicke von 20 bis 200 $\mu$m aufweist.

Im Rahmen der vorliegenden Erfindung bezeichnet die Angabe des Schrumpfes S [%] in der Einheit Prozent die Differenz zwischen der Länge der Folie in der jeweiligen Schrumpf- bzw. Streckrichtung vor dem Schrumpfen und nach dem Schrumpfen, bezogen auf die Länge vor dem Schrumpfen:

$$S[\%] = \frac{\text{Länge vor dem Schrumpfen} - \text{Länge nach dem Schrumpfen}}{\text{Länge vor dem Schrumpfen}}$$

Die Erfinder haben festgestellt, dass die Art der Glykolmodifizierung der verwendeten, halbkristallinen oder amorphen Copolyester die Eigenschaften der daraus hergestellten Schrumpffolien in erheblichem Maße beeinflusst. Schrumpffolien aus NPG-modifiziertem Copolyester unterscheiden sich von Schrumpffolien aus CHDM-modifiziertem Copolyester durch folgende Eigenschaften:

- keine Verblockung nach Corona-Vorbehandlung;

- verminderter Twist bzw. Bowing;

- gute Verklebbarkeit mit Lösemitteln;

- hohe Schrumpfspannung;

- steile Schrumpfkurve, die prozesstechnisch kaum beeinflussbar ist.

Den Erfindern ist es überraschenderweise gelungen, eine Schrumpffolie zu schaffen, welche die vorteilhaften Eigenschaften von CHDM- und NPG-modifizierten Copolyestern verbindet, wobei die jeweils nachteiligen Eigenschaften weitgehend vermieden werden.

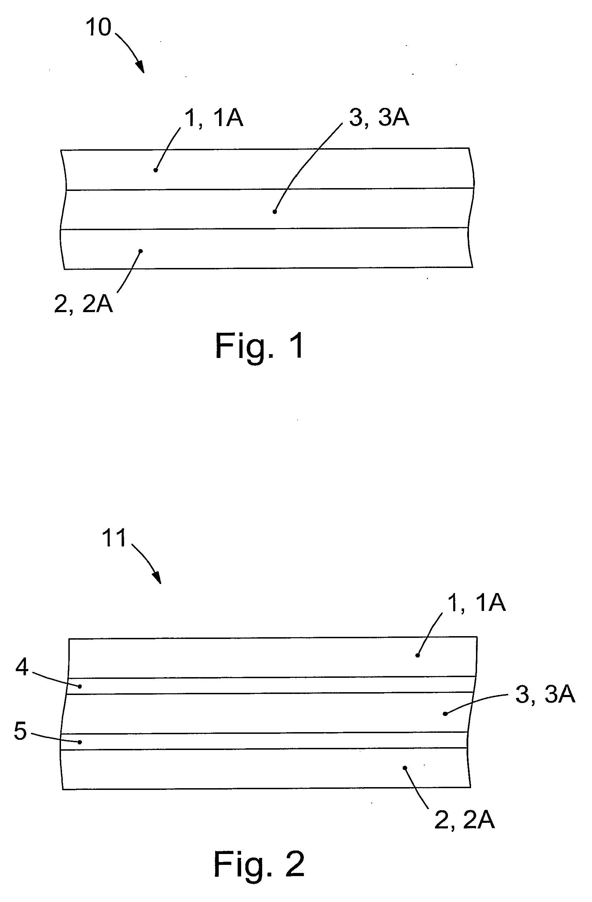

Figur 1 zeigt einen schematischen Querschnitt einer erfindungsgemäßen Folie 10 mit einer ersten, zweiten und dritten Lage 1, 2 und 3, wobei die dritte Lage 3 zwischen der ersten und zweiten Lage 1 und 2 angeordnet ist. Jede der drei Lagen 1, 2 und 3 besteht aus einem Werkstoff der unabhängig voneinander einen mit Neopentylglycol modifizierten Copolyester 1A, 2A, respektive einen mit 1,4-Cyclohexandimethanol modifizierten Copolyester 3A enthält, wobei der Anteil des Copolyesters 1A, 2A, respektive 3A mehr als 30 Gew.-%, vorzugsweise mehr als 50 Gew.-% und insbesondere mehr als 70 Gew.-%, bezogen auf das Gesamtgewicht der Lage 1, 2, respektive 3 beträgt.

Die erfindungsgemäße Folie 10 wird vorzugsweise durch Coextrusion hergestellt unter Verwendung einer bekannten Folienanlage mit zwei bis fünf Extrudern, deren ausgangseitige Polymerschmelzen über einen Feedblock strömungstechnisch übereinandergelegt werden und über eine Breitschlitzdüse auf einen Kühlwalzenstuhl zu einer Mehrlagen-Flachfolie ausgeformt wird. In einer zweckmäßigen Ausführung der Erfindung wird eine dreilagige Folie 10 hergestellt, wobei eine erste und zweite Lage (1, 2) der Folie 10 aus dem gleichen, mit Neopentylglycol modifizierten Copolyester (1A = 2A) bestehen. Dementsprechend wird eine Folienanlage mit einem Extruder E1 für den Copolyester (1A = 2A) der ersten und zweite Lage (1, 2) und einem weiteren Extruder E2 für den, mit 1,4-Cyclohexandimethanol modifizierten Copolyester (3A) der dritten Lage 3 verwendet.

Figur 2 zeigt einen schematischen Querschnitt einer weiteren erfindungsgemäßen Folie 11 mit einer ersten, zweiten und dritten Lage 1, 2 und 3, wobei zwischen der ersten Lage 1 und der dritte Lage 3 eine erste Zwischenlage 4 und zwischen der zweiten Lage 2 und der dritten Lage 3 eine zweite Zwischenlage 5 angeordnet ist. Jede der drei Lagen 1, 2 und 3 besteht aus einem Werkstoff der unabhängig voneinander einen mit Neopentylglycol modifizierten Copolyester 1A, 2A, respektive einen mit 1,4-Cyclohexandimethanol modifizierten Copolyester 3A enthält, wobei der Anteil des Copolyesters 1A, 2A, respektive 3A mehr als 30 Gew.-%, vorzugsweise mehr als 50 Gew.-% und insbesondere mehr als 70 Gew.-%, bezogen auf das Gesamtgewicht der Lage 1, 2, respektive 3 beträgt. Die erste und zweite Zwischenlage 4 und 5 bestehen vorzugweise aus einem haftvermittelnden Stoff, wie beipielsweise einem Ethylenvinylacetat-Copolymer.

## Messverfahren

Die Kristallisations-Halbwertszeit des in der dritten Lage 3 eingesetzten Copolyesters 3A, sowie der in der ersten und zweiten Lage 1,2 verwendeten Copolyester 1A und 2A wird mithilfe eines dynamischen Differenzkalorimeters (Differential Scanning Calorimeter bzw. DSC) bestimmt. Die dynamische Differenzkalorimetrie (DSC) ist eine Standardmethode für die Messung der thermischen Eigenschaften, insbesondere der Phasenübergangstemperaturen von Festkörpern. In der vorliegenden Erfindung wird die Kristallisationshalbwertszeit ermittelt, indem 15 mg des zu messenden Copolyesters 3A auf 290 °C erwärmt, hieran anschließend in Gegenwart von Helium mit einer Rate von 320 °C pro Minute auf eine vorgegebene Temperatur von 180 bis 210 °C gekühlt und die Zeitspanne bis zum Erreichen der isothermen Kristallisationstemperatur bzw. des Kristallisationspeaks der DSC-Kurve detektiert. Anhand des zeitabhängigen Verlaufs der Kristallisation wird die Kristallisationshalbwertszeit bestimmt. Die Kristallisationshalbwertszeit entspricht der Zeit, die bei der vorgegebenen Temperatur von 180 bis 210 °C nach der Initialphase der Kristallisation benötigt wird, um in der Probe 50 % der maximal erreichbaren Kristallinität zu erhalten.

Im Rahmen der vorliegenden Erfindung wird der Haft- und Gleitreibungskoeffizient einer Folie gemäß DIN EN ISO 8295 mit einem Gerät des Typs Z010 der Firma Zwick Roell bestimmt. Die Messbedingungen sind:

| | |
|---|---|
| Gleitfläche / Auflage | 200 mm x 400 mm |
| Probekörper Material | Aluminium |
| Masse Probekörper | 200 g (= 1,96 N) |
| Probekörper Auflagefläche | 50 mm x 80 mm |
| Probekörpergeschwindigkeit | 100 mm/min |
| Luftfeuchte | 50 % r.h. |

Die Dicke wird in Anlehnung an DIN 53370 mittels eines Tastgeräts der Firma Mitutoyo, Japan, Typ 543/250 B bestimmt. Bei den Punktmessungen wurde die Folie zwischen den geöffneten Messflächen des Tastgerätes eingelegt, die dann anschließend stossfrei geschlossen wurden. Die Dicke wurde von dem Tastgerät abgelesen.

Um den Dickenanteil der ersten, zweiten und dritten Lage 1, 2 und 3, bezogen auf die Gesamtdicke einer erfindungsgemäßen Folie zu bestimmen, wurden mit einem Mikrotom unter Einwirkung von flüssigem Stickstoff kleine Probenstücke aus der jeweiligen Folie geschnitten und die Schnittkanten mittels eines FTIR-Mikroskops oder eines Rasterelektronenmikroskops abgebildet. Die Grenze zwischen den Lagen 1 und 3 sowie 2 und 3 ist in den FTIR-mikroskopischen Aufnahmen deutlich zu erkennen, so dass der relative Dickenanteil jeder Lage zuverlässig ermittelt werden kann. Alternativ hierzu wurden bei der Herstellung der erfindungsgemäßen Folie dem Werkstoff der dritten Lage 3 oder wahlweise dem Werkstoff der ersten und zweiten Lage 1, 2 Farbpigmente zugefügt und an Schnittkanten der dementsprechend erhaltenen Folie die Dicke bzw. der Dickenanteil der Lagen 1, 2, 3 mithilfe eines einfachen optischen Mikroskops bestimmt.

Die Schrumpfmessung wird nach DIN 53377 durchgeführt. Hierzu wird die Folie bei vorgegebener Temperatur von 60, 65, 70, 75, 80, 85, 90 und 95 °C im Wasserbad für 30 s gelagert. Die nach dieser Zeit eingetretene Maßänderung wird bei Raumtemperatur gemessen.

Die Schrumpfspannung wird nach DIN 53369 mit einem Gerät des Typs Retratech der Firma Artec Testnology gemessen.

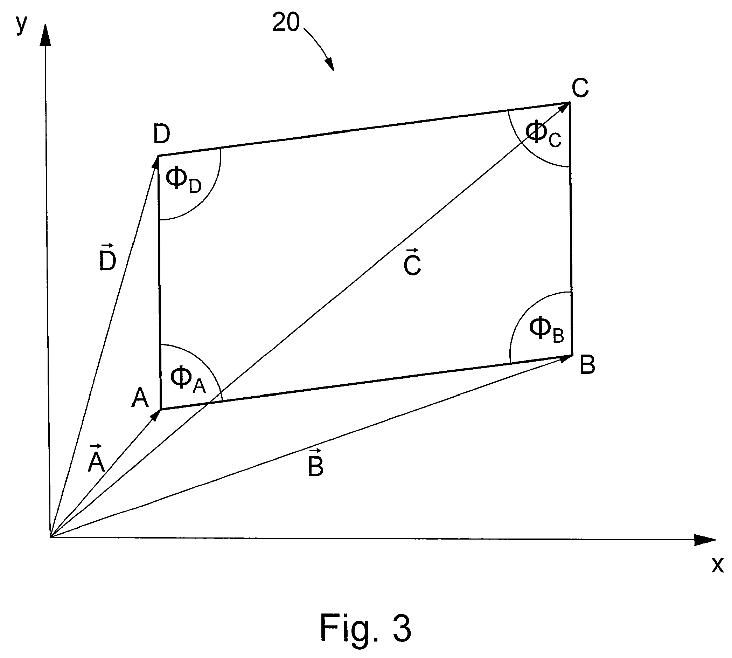

Zur Messung des Twist- bzw. Bowingwinkels werden aus einer uniaxial in Maschinenrichtung (MD) oder transversal zur Maschinenrichtung (TD) verstreckten Folie zehn oder mehr Folienprüflinge jeweils in Form eines Rechtecks mit den Abmessungen 150 mm in Verstreckrichtung und 100 mm senkrecht zur Verstreckrichtung geschnitten. Beispielsweise hat ein aus einer transversal zur Maschinenrichtung (TD) verstreckten Folie geschnittener Folienprüfling die Abmessungen 150 mm in TD und 100 mm in MD. Die Folienprüflinge werden einer "freien Schrumpfung" unterzogen in einem Wasserbad mit einer Temperatur von 95 °C. Die Verweildauer in dem Wasserbad bzw. die Schrumpfzeit beträgt 15 Sekunden. Der Begriff "freie Schrumpfung" bezeichnet hierbei den Umstand, dass der Folienprüfling in dem Wasserbad mechanisch nicht fixiert und frei beweglich ist. Nach der Entnahme aus dem Wasserbad wird der Folienprüfling vermessen, um einen gegebenenfalls aufgetretenen Verzug bzw. Twist- oder Bowingwinkel $\Delta\Phi$ zu bestimmen. Der Twist- oder Bowingwinkel $\Delta\Phi$ bezeichnet die Abweichung des von einer Kante des Folienprüflings in Verstreckrichtung und einer Kante des Folienprüflings in der nicht verstreckten Richtung eingeschlossenen Winkels von 90 Grad. In Fig. 3 ist die Bestimmung des Twistwinkels $\Delta\Phi$ anhand eines geschrumpften Folienprüflings aus einer in TD verstreckten Folie dargestellt, wobei die Kanten AD und BC parallel zur Schrumpf- bzw. Streckrichtung verlaufen. Nach freier Schrumpfung in Wasser bei 95 °C für 15 Sekunden wird der Folienprüfling auf eine Metallplatte mit einem eingravierten Millimetergitter flach aufgelegt, eine der beiden, in Schrumpf- bzw. Streckrichtung verlaufenden Kanten des Folienprüflings parallel zur x- oder y-Achse des eingravierten Metallgitters ausgerichtet und die Lage bzw. die kartesischen Koordinaten der vier Ecken A, B, C, D des Folienprüflings bestimmt, wobei die vier Ecken gemäß der in der Mathematik üblichen Konvention entgegen dem Uhrzeigersinn auf dem Umfang des Folienprüflings angeordnet sind. Der an jedem der Eckpunkte A, B, C, D von den Kanten des Folienprüflings eingeschlossene Winkel $\Phi_A$, $\Phi_B$, $\Phi_C$, $\Phi_D$ wird dann gemäß den folgenden Beziehungen berechnet:

$$\Phi_A = \cos^{-1}\left\{ \frac{(\vec{D}-\vec{A})\cdot(\vec{B}-\vec{A})}{|\vec{D}-\vec{A}|\cdot|\vec{B}-\vec{A}|} \right\}$$

$$\Phi_B = \cos^{-1}\left\{ \frac{(\vec{A}-\vec{B})\cdot(\vec{C}-\vec{B})}{|\vec{A}-\vec{B}|\cdot|\vec{C}-\vec{B}|} \right\}$$

$$\Phi_C = \cos^{-1}\left\{ \frac{(\vec{D}-\vec{C})\cdot(\vec{B}-\vec{C})}{|\vec{D}-\vec{C}|\cdot|\vec{B}-\vec{C}|} \right\}$$

$$\Phi_D = \cos^{-1}\left\{ \frac{(\vec{A}-\vec{D})\cdot(\vec{C}-\vec{D})}{|\vec{A}-\vec{D}|\cdot|\vec{C}-\vec{D}|} \right\}$$

mit

$$\vec{A} = \left( x_A, y_A \right)$$

$$\vec{B} = \left( x_B, y_B \right)$$

$$\vec{C} = (x_C, y_C)$$

$$\vec{D} = (x_D, y_D)$$

Wobei $(x_A, y_A)$, $(x_B, y_B)$, $(x_C, y_C)$, $(x_D, y_D)$ die kartesischen Koordinaten und

$$\vec{A}, \vec{B}, \vec{C}, \vec{D}$$

die zweidimensionalen Lagevektoren der Eckpunkte A, B, C, D bezeichnen. Das Produkt zweier Vektoren und die Länge bzw. der Betrag eines Vektors werden in bekannter Weise gemäß den Beziehungen

$$\vec{A} \cdot \vec{B} = x_A \cdot x_B + y_A \cdot y_B$$

$$|\vec{A}| = \sqrt{x_A^2 + y_A^2}$$

berechnet. Der Twistwinkel $\Delta\Phi$ wird schließlich durch Mittelung über die jeweiligen Abweichungen der Eckwinkel $\Phi_A$, $\Phi_B$, $\Phi_C$, $\Phi_D$ von 90° bestimmt, gemäß der Formel

$$\Delta\Phi = \{ |\Phi_A - 90°| + |\Phi_B - 90°| + |\Phi_C - 90°| + |\Phi_D - 90°| \} / 4$$

**Beispiele**

Wie vorstehend beschrieben, wurden vier erfindungsgemäße Folien (nachfolgend als Beispiel 1, 2, 3 und 4 bezeichnet) sowie zwei Vergleichsfolien (nachfolgend als Vergleichsbeispiele 5 und 6 bezeichnet) nach dem Stand der Technik mit einer Länge von jeweils 2000 bis 3000 m durch Coextrusion auf einer bekannten Folienanlage mit transversaler Streckeinheit (TD) hergestellt. Die Breite der Folien nach Verstreckung betrug zwischen 4,0 und 5 m. Die wesentlichen Parameter und Eigenschaften der Folien gemäß Beispiel 1, 2, 3, 4 und Vergleichsbeispielen 5 und 6 sind in Tabelle 1 wiedergegeben. In Fig. 4 ist der gemäß DIN 53377 gemessene Temperatur-Schrumpf-Verlauf S(T) der jeweiligen Folie in Form eines Diagramms gezeigt.

Die ersten 1000 m jeder der Versuchsfolien wurden entfernt bzw. als Recyclingmaterial klassifiziert. Aus den nachfolgenden 1000 m wurden jeweils aus einem zwischen den Längsrändern der Folienbahn mittig angeordneten Bereich mehrere schmale Folienbahnen mit einer Breite von 300 mm und einer Länge von etwa 1000 m geschnitten und auf gewöhnliche Trägerrollen sowie auf speziell präparierte "Blocking/Ghosting-Rollen" aufgewickelt.

Die "Blocking/Ghosting-Rollen" bestehen aus einer gewöhnlichen Trägerrolle aus Pappe oder Kunststoff, die an einer etwa mittig zur Folienbahn angeordneten Position vollumfänglich mit einer umlaufenden Wulst ausgestattet ist. Beispielsweise wird eine Wulst mit einer auf den Radius der Trägerrolle bezogenen Dicke von 2 bis 5 mm und einer Breite von etwa 20 mm in axialer Richtung der Trägerrolle erzeugt, indem die Trägerrolle mehrfach mit einem Klebeband umwickelt wird. Die Wulst der Blocking/ Ghosting-Rollen erzeugt in den darauf aufgewickelten Folienbahnen einen Bereich, in dem der Druck zwischen benachbarten Folienlagen erhöht ist gegenüber den einfach zylindrisch ausgebildeten Bereichen der Trägerrolle. Die auf Ghosting-Rollen aufgewickelten Folienbahnen wurden 5 Tage lang gelagert und hieran anschließend wieder abgewickelt und visuell auf Blocking- bzw. Ghosting-Defekte untersucht. Bei den erfindungsgemäß hergestellten Folienbahnen der Beispiele 1, 2, 3, 4 waren keine Blocking/Ghosting-Defekte detektierbar. Demgegenüber wiesen die Folienbahnen der Vergleichsbeispiele 5 und 6 an der Position des Wulstes etwa 4 bis 12 Blocking/Ghosting-Defekte pro 100 m Länge auf.

Die auf gewöhnliche Trägerrollen aufgewickelten Folienbahnen wurden einer einseitigen Coronabehandlung unterzogen und erneut aufgewickelt, wobei die coronabehandelte Seite die Innenseite der Wicklung bildete. Hieran anschließend wurde die coronabehandelte Seite mittels eines Digitaldruckers mit einem mehrfarbigen geometrischen Linienmuster bedruckt und die Folienbahn in einer Konfektioniereinheit randbeschnitten, gefaltet und mittels Lösemittel zu einem Schlauch derart verklebt, dass die bedruckte Seite die Innenseite des Schlauches bildet. Die auf diese Weise erhaltenen Schrumpffolienschläuche wurden einer Etikettieranlage mit nachgeschaltetem Hitzetunnel zugeführt und mit Wasser gefüllte konturierte PET-Flaschen mit einem Durchmesser von bis zu 80 mm mit Schrumpfetiketten ausgestattet. Die Länge der Schrumpfetiketten in Richtung der Flaschenachse betrug 130 mm. Für die Beispiele 1,2,3, 4 und die Vergleichsbeispiele 5 und 6 wurden jeweils 10000 Flaschen mit Schrumpfetiketten aus der entsprechenden Folie bestückt und mit einer vollautomatischen optischen Inspektionsanlage des Typs Gemini 3D der Firma Emhart Glass SA mit einem Durchsatz von 200 Flaschen pro Minute auf Defekte im Druckbild und in der Klebenaht geprüft.

Tabelle 1

| Parameter | Beispiel 1 | Beispiel 2 | Beispiel 3 | Beispiel 4 | Vergleichsbeispiel 5 | Vergleichsbeispiel 6 |
|---|---|---|---|---|---|---|
| **Lage 1 Dickenanteil** | 20% | 10% | 5% | 10% | 10% | 10% |
| **Lage 2 Dickenanteil** | 20% | 10% | 5% | 10% | 10% | 10% |
| **Lage 3 Dickenanteil** | 60% | 80% | 90% | 80% | 80% | 80% |
| **Copolyester 1A Typ** | 10 mol-% NPG[1] | 10 mol-% NPG[1] | 15 mol% NPG[1] | 10 mol-% NPG[1] | 18 mol-% CHDM[2] | 20 mol% CHDM[2] |
| **Copolyester 2A Typ** | 10 mol-% NPG[1] | 10 mol-% NPG[1] | 15 mol% NPG[1] | 10 mol% NPG[1] | 18 mol-% CHDM[2] | 20 mol% CHDM[2] |
| **Copolyester 3A Typ** | 20 mol% CHDM[2] | 20 mol-% CHDM[2] | 20 mol-% CHDM[2] | 20 mol-% CHDM[2] | 18 mol-% CHDM[2] | 20 mol-% CHDM[2] |
| **Copolyester 1A Anteil[3]** | 85 Gew.-% | 85 Gew.-% | 85 Gew.-% | 98 Gew.-% | 98 Gew.-% | 98 Gew.-% |
| **Copolyester 2A Anteil[3]** | 85 Gew.-% | 85 Gew.-% | 85 Gew.-% | 98 Gew.-% | 98 Gew.-% | 98 Gew.-% |
| **Copolyester 3A Anteil[4]** | 96 Gew.-% | 98 Gew.-% | 96 Gew.-% | 98 Gew.-% | 100 Gew.% | 96 Gew.-% |
| **Strecktemperatur der Folie** | 85 °C | 85 °C | 85 °C | 85 °C | 90 °C | 85 °C |
| **Streckgrad transversal (TD)** | 5 | 5 | 5 | 5 | 5 | 5 |
| **Streckgrad longitudinal (MD)** | - | - | - | - | - | - |
| **Gesamtdicke nach Verstreckung** | 50 $\mu$m | 50 $\mu$m | 50 $\mu$m | 50 $\mu$m | 75 $\mu$m | 50 $\mu$m |
| **Schrumpfspannung** | 8,2 MPa | 7,4 MPa | 6,5 MPa | 8,6 MPa | 9,1 MPa | 6,0 MPa |
| **Haftreibungskoeffizient** | 0,50 | 0,28 | 0,40 | 0,36 | 0,75 | 0,78 |
| **Gleitreibungskoeffizient** | 0,38 | 0,45 | 0,28 | 0,23 | 0,65 | 0,63 |
| **Verblocken nach Coronabehandlung** | nein | nein | gering | nein | ja | ja |
| **Twistwinkel** | 11,5° | 15,5° | 16,2° | 12,3° | 17,5° | 20,5° |
| **Fehlerrate** | 0,4% | 0,7% | 0,9% | 0,6% | 2,2% | 2,4% |

[1]NPG = Neopentylglycol; [2]CHDM = 1,4-Cyclohexandimethanol ; [3]die erste und zweite äußere Lage enthalten jeweils ein organisches oder anorganisches Antiblockadditiv mit einem Anteil von etwa 2 Gew.-% sowie ggf. bis zu 13 Gew.-% Copolyester des Typs 3A, bezogen auf das Gesamtgewicht der Lage; [4]die innere dritte Lage enthält UV-Absorber und/oder Farbpigmente mit einem Anteil von bis zu 4 Gew.-%, bezogen auf das Gesamtgewicht der dritten Lage.

**EP 2 862 714 B1**

**Patentansprüche**

1. Folie (10, 11), umfassend eine erste und zweite äußere Lage (1, 2) und eine dritte Lage (3), die zwischen der ersten und zweiten Lage (1, 2) angeordnet ist, wobei die erste, zweite und dritte Lage (1, 2, 3) unabhängig voneinander jeweils aus einem ersten, zweiten und dritten Copolyester (1A, 2A, 3A) mit einem Anteil von größer 30 Gew.-% bezogen auf das Gesamtgewicht der Lage und gegebenenfalls einem oder mehreren anderen Polymeren sowie Additiven besteht, **dadurch gekennzeichnet, dass**

   - der erste Copolyester (1A) aus Disäureresten und Diolresten aufgebaut ist, mindestens 80 Mol-% der Disäurereste Terephthalsäurereste sind und die Diolreste 70 bis 90 Mol-% Ethylenglykolreste und 5 bis 20 Mol-% Neopentylglykolreste umfassen;
   - der zweite Copolyester (2A) aus Disäureresten und Diolresten aufgebaut ist, mindestens 80 Mol-% der Disäurereste Terephthalsäurereste sind und die Diolreste 70 bis 90 Mol-% Ethylenglykolreste und 5 bis 20 Mol-% Neopentylglykolreste umfassen; und
   - der dritte Copolyester (3A) aus Disäureresten und Diolresten aufgebaut ist, mindestens 80 Mol-% der Disäurereste Terephthalsäurereste sind und die Diolreste 60 bis 90 Mol-% Ethylenglykolreste und 10 bis 35 Mol-% 1,4-Cyclohexandimethanolreste umfassen.

2. Folie (10, 11) nach Anspruch 1, **dadurch gekennzeichnet, dass** der Anteil des ersten Copolyesters (1A) in der ersten Lage (1), des zweiten Copolyesters (2A) in der zweiten Lage (2) und des dritten Copolyesters (3A) in der dritten Lage (3) unabhängig voneinander mehr als 50 Gew.-% bezogen auf das Gesamtgewicht der jeweiligen Lage beträgt.

3. Folie (10, 11) nach Anspruch 1 oder 2, **dadurch gekennzeichnet, dass** die Diolreste des dritten Copolyesters (3A) 15 bis 25 Mol-% 1,4-Cyclohexandimethanolreste umfassen.

4. Folie (10, 11) nach Anspruch 1,2 oder 3, **dadurch gekennzeichnet, dass** der erste und zweite Copolyester (1A, 2A) halbkristallin oder amorph ist und eine Kristallisationshalbwertszeit im geschmolzenen Zustand von mindestens 5 Minuten aufweist.

5. Folie (10, 11) nach Anspruch 1, 2, 3 oder 4, **dadurch gekennzeichnet, dass** die Diolreste des ersten Copolyesters (1A) einen Anteil von 10 bis 20 Mol-% Neopentylglykolreste aufweisen.

6. Folie (10, 11) nach Anspruch 1, 2, 3, 4, 5 oder 6, **dadurch gekennzeichnet, dass** die Diolreste des zweiten Copolyesters (2A) einen Anteil von 10 bis 20 Mol-% Neopentylglykolreste aufweisen.

7. Folie (10, 11) nach Anspruch 1, 2, 3, 4, 5 oder 6, **dadurch gekennzeichnet, dass** die Folie (10, 11) nach monoaxialer Verstreckung mit einem Streckgrad von 1,3 bis 6 eine Gesamtdicke von 20 bis 150 $\mu$m aufweist.

8. Folie (10, 11) nach Anspruch 1, 2, 3, 4, 5, 6 oder 7, **dadurch gekennzeichnet, dass** die Dicke der dritten Lage (3) 40 bis 94 % der Gesamtdicke der Folie (10, 11) beträgt.

9. Folie (10, 11) nach Anspruch 1, 2, 3, 4, 5, 6 oder 7, **dadurch gekennzeichnet, dass** die Dicke der dritten Lage (3) 60 bis 94 % der Gesamtdicke der Folie (10, 11) beträgt.

10. Folie (10, 11) nach Anspruch 1, 2, 3, 4, 5, 6, 7, 8 oder 9, **dadurch gekennzeichnet, dass** die Folie (10, 11) monoaxial oder biaxial verstreckt ist mit einem Streckgrad von 1,3 bis 6 und bei einer Temperatur von 75 °C in Streckrichtung um 20 bis 80 % schrumpft.

11. Folie (10, 11) nach Anspruch 1, 2, 3, 4, 5, 6, 7, 8, 9 oder 10, **dadurch gekennzeichnet, dass** die Folie (10, 11) monoaxial oder biaxial verstreckt ist mit einem Streckgrad von 1,3 bis 6 und bei einer Temperatur von 95 °C in Streckrichtung um 50 bis 85 % schrumpft.

12. Folie (10, 11) nach Anspruch 1, 2, 3, 4, 5, 6, 7, 8, 9, 10 oder 11, **dadurch gekennzeichnet, dass** die Folie (10, 11) monoaxial oder biaxial verstreckt ist mit einem Streckgrad von 1,3 bis 6 und bei einer Temperatur von 95 °C eine Schrumpfspannung von kleiner 12 MPa aufweist.

13. Folie (10, 11) nach Anspruch 1, 2, 3, 4, 5, 6, 7, 8, 9, 10 oder 11, **dadurch gekennzeichnet, dass** die Folie (10, 11) monoaxial oder biaxial verstreckt ist mit einem Streckgrad von 1,3 bis 6 und bei einer Temperatur von 95 °C eine Schrumpfspannung von kleiner 8,5 MPa aufweist.

**14.** Folie (10, 11) nach Anspruch 1, 2, 3, 4, 5, 6, 7, 8, 9, 10, 11, 12 oder 13, **dadurch gekennzeichnet, dass** die Folie (10, 11) monoaxial oder biaxial verstreckt ist mit einem Streckgrad von 1,3 bis 6 und in mindestens einer Streckrichtung einen Temperatur-Schrumpf-Verlauf S(T) aufweist mit

$$92,5 + T / (1 + 3,6 \cdot 10^{-4} \cdot T^2) \; < \; S(T) \; < \; 85,8 - 1763 / [23 + (T - 58,3)^2]$$

wobei S(T) den Schrumpf in Prozent und T die Temperatur in der Einheit °C bezeichnet.

**15.** Folie (10, 11) nach Anspruch 1, 2, 3, 4, 5, 6, 7, 8, 9, 10, 11, 12, 13 oder 14, **dadurch gekennzeichnet, dass** die Folie (10, 11) in unverstrecktem und verstrecktem Zustand einen gemäß DIN EN ISO 8295 gemessenen Eigen-Haftreibungskoeffizienten von kleiner 0,7 und einen gemäß DIN EN ISO 8295 gemessenen Eigen-Gleitreibungskoeffizienten von kleiner 0,6 aufweist.

**16.** Folie (10, 11) nach Anspruch 1, 2, 3, 4, 5, 6, 7, 8, 9, 10, 11, 12, 13, 14 oder 15, **dadurch gekennzeichnet, dass** die Folie (10, 11) ein- oder beidseitig mittels Coronaentladung behandelt ist.

**Claims**

**1.** A film (10, 11) comprising a first and second exterior layer (1, 2) and a third layer (3) arranged between the first and second layer (1, 2), where the first, second, and third layer (1, 2, 3) is mutually independently respectively composed of a proportion of more than 30 % by weight, based on the total weight of the layer, of a first, second, and third copolyester (1A, 2A, 3A), and optionally of one or more other polymers and additives, **wherein**

- the first copolyester (1A) is composed of diacid moieties and of diol moieties, at least 80 mol % of the diacid moieties are terephthalic acid moieties, and the diol moieties comprise from 70 to 90 mol % of ethylene glycol moieties and from 5 to 20 mol % of neopentyl glycol moieties;
- the second copolyester (2A) is composed of diacid moieties and of diol moieties, at least 80 mol % of the diacid moieties are terephthalic acid moieties, and the diol moieties comprise from 70 to 90 mol % of ethylene glycol moieties and from 5 to 20 mol % of neopentyl glycol moieties; and
- the third copolyester (3A) is composed of diacid moieties and of diol moieties, at least 80 mol % of the diacid moieties are terephthalic acid moieties, and the diol moieties comprise from 60 to 90 mol % of ethylene glycol moieties and from 10 to 35 mol % of 1,4-cyclohexanedimethanol moieties.

**2.** The film (10, 11) as claimed in claim 1, **wherein** the proportion of the first copolyester (1A) in the first layer (1), of the second copolyester (2A) in the second layer (2), and of the third copolyester (3A) in the third layer (3) is mutually independently more than 50 % by weight, based on the total weight of the respective layer.

**3.** The film (10, 11) as claimed in claim 1 or 2, **wherein** the diol moieties of the third copolyester (3A) comprise from 15 to 25 mol % of 1,4-cyclohexanedimethanol moieties.

**4.** The film (10, 11) as claimed in claim 1, 2, or 3, **wherein** the first and second copolyester (1A, 2A) are semicrystalline or amorphous and have a crystallization half-life time in the molten state of at least 5 minutes.

**5.** The film (10, 11) as claimed in claim 1, 2, 3, or 4, **wherein** the diol moieties of the first copolyester (1A) comprise a proportion of from 10 to 20 mol % of neopentyl glycol moieties.

**6.** The film (10, 11) as claimed in claim 1, 2, 3, 4, or 5, **wherein** the diol moieties of the second copolyester (2A) comprise a proportion of from 10 to 20 mol % of neopentyl glycol moieties.

**7.** The film (10, 11) as claimed in claim 1, 2, 3, 4, 5, or 6, **wherein** the total thickness of the film (10, 11) after monoaxial orientation with a degree of stretching of from 1.3 to 6 is from 20 to 150 $\mu$m.

8. The film (10, 11) as claimed in claim 1, 2, 3, 4, 5, 6, or 7, **wherein** the thickness of the third layer (3) is from 40 to 94 % of the total thickness of the film (10, 11).

9. The film (10, 11) as claimed in claim 1, 2, 3, 4, 5, 6, or 7, **wherein** the thickness of the third layer (3) is from 60 to 94 % of the total thickness of the film (10, 11).

10. The film (10, 11) as claimed in claim 1, 2, 3, 4, 5, 6, 7, 8, or 9, **wherein** the film (10, 11) has been monoaxially or biaxially oriented with a degree of stretching of from 1.3 to 6, and at a temperature of 75 °C shrinks in the direction of stretching by from 20 to 80 %.

11. The film (10, 11) as claimed in claim 1, 2, 3, 4, 5, 6, 7, 8, 9, or 10, **wherein** the film (10, 11) has been monoaxially or biaxially oriented with a degree of stretching of from 1.3 to 6, and at a temperature of 95 °C shrinks in the direction of stretching by from 50 to 85 %.

12. The film (10, 11) as claimed in claim 1, 2, 3, 4, 5, 6, 7, 8, 9, 10, or 11, **wherein** the film (10, 11) has been monoaxially or biaxially oriented with a degree of stretching of from 1.3 to 6, and at a temperature of 95 °C exhibits a shrinkage stress of less than 12 MPa.

13. The film (10, 11) as claimed in claim 1, 2, 3, 4, 5, 6, 7, 8, 9, 10, or 11, **wherein** the film (10, 11) has been monoaxially or biaxially oriented with a degree of stretching of from 1.3 to 6, and at a temperature of 95 °C exhibits a shrinkage stress of less than 8.5 MPa.

14. The film (10, 11) as claimed in claim 1, 2, 3, 4, 5, 6, 7, 8, 9, 10, 11, 12, or 13, **wherein** the film (10, 11) has been monoaxially or biaxially oriented with a degree of stretching of from 1.3 to 6, and in at least one stretching direction exhibits a temperature-shrinkage curve S(T) where

$$92.5 + T / (1 + 3.6 \cdot 10^{-4} \cdot T^2) \ < \ S(T) \ < \ 85.8 - 1763 / [23 + (T - 58.3)^2]$$

where S(T) denotes the shrinkage in percent and T the temperature in the unit °C.

15. The film (10, 11) as claimed in claim 1, 2, 3, 4, 5, 6, 7, 8, 9, 10, 11, 12, 13, or 14, **wherein,** in unoriented and oriented condition, the film (10, 11) has a coefficient of static friction with respect to itself of less than 0.7 measured in accordance with DIN EN ISO 8295, and a coefficient of sliding friction with respect to itself, measured in accordance with DIN EN ISO 8295, of less than 0.6.

16. The film (10, 11) as claimed in claim 1, 2, 3, 4, 5, 6, 7, 8, 9, 10, 11, 12, 13, 14, or 15, **wherein** the film (10, 11) has been treated by means of corona discharge on one or both sides.

**Revendications**

1. Film (10, 11) comprenant une première couche et une deuxième couche extérieure (1, 2) et une troisième couche (3), qui est disposée entre la première et la deuxième couche (1, 2), dans lequel la première, la deuxième et la troisième couche (1, 2, 3) sont constituées indépendamment les unes des autres respectivement d'un premier, d'un deuxième et d'un troisième copolyester (1A, 2A, 3A) présentant une fraction supérieure à 30 % en poids par rapport au poids total de la couche et, le cas échéant, d'un ou de plusieurs autres polymères et d'additifs également, **caractérisé en ce**

   - **que** le premier copolyester (1A) présente une structure à base de radicaux de diacide et de radicaux de diol, en ce qu'au moins 80 % en moles des radicaux de diacide sont des radicaux d'acide téréphtalique et en ce que les radicaux de diol comprennent 70 à 90 % en moles de radicaux d'éthylène glycol et 5 à 20 % en moles de radicaux de néopentylglycol ;
   - **que** le deuxième copolyester (2A) présente une structure à base de radicaux de diacide et de radicaux de diol, en ce qu'au moins 80 % en moles des radicaux de diacide sont des radicaux d'acide téréphtalique et en ce que les radicaux de diol comprennent 70 à 90 % en moles de radicaux d'éthylenglycol et 5 à 20 % en moles de radicaux de néopentylglycol ; et

- **que** le troisième copolyester (3A) présente une structure à base de radicaux de diacide et de radicaux de diol, en ce qu'au moins 80 % en moles des radicaux de diacide sont des radicaux d'acide téréphtalique et en ce que les radicaux de diol comprennent 60 à 90 % en moles de radicaux d'éthylenglycol et 10 à 35 % en moles de radicaux de 1,4-cyclohexanediméthanol.

2. Film (10, 11) selon la revendication 1, **caractérisé en ce que** la fraction du premier copolyester (1A) dans la première couche (1), du deuxième copolyester (2A) dans la deuxième couche (2) et du troisième copolyester (3A) dans la troisième couche (3) représentent, indépendamment les unes des autres, plus de 50 % en poids par rapport au poids total de la couche respective.

3. Film (10, 11) selon la revendication 1 ou 2, **caractérisé en ce que** les radicaux de diol du troisième copolyester (3A) comprennent 15 à 25 % en moles de radicaux de 1,4-cyclohexanediméthanol.

4. Film (10, 11) selon la revendication 1, 2 ou 3, **caractérisé en ce que** le premier et le deuxième copolyester (1A, 2A) sont semi-cristallins ou amorphes et présentent une demi-vie de cristallisation, dans l'état fondu, d'une durée d'au moins 5 minutes.

5. Film (10, 11) selon la revendication 1, 2, 3 ou 4, **caractérisé en ce que** les radicaux de diol du premier copolyester (1A) présentent une fraction allant de 10 à 20 % en moles de radicaux de néopentylglycol.

6. Film (10, 11) selon la revendication 1, 2, 3, 4, 5 ou 6, **caractérisé en ce que** les radicaux de diol du deuxième copolyester (2A) présentent une fraction allant de 10 à 20 % en moles de radicaux de néopentylglycol.

7. Film (10, 11) selon la revendication 1, 2, 3, 4, 5 ou 6, **caractérisé en ce que** le film (10, 11) présente après un étirage monoaxial selon un degré d'étirage allant de 1,3 à 6 une épaisseur totale allant de 20 à 150 $\mu$m.

8. Film (10, 11) selon la revendication 1, 2, 3, 4, 5, 6 ou 7, **caractérisé en ce que** l'épaisseur de la troisième couche (3) représente 40 à 94 % de l'épaisseur totale du film (10, 11).

9. Film (10, 11) selon la revendication 1, 2, 3, 4, 5, 6 ou 7, **caractérisé en ce que** l'épaisseur de la troisième couche (3) représente 60 à 94 % de l'épaisseur totale du film (10, 11).

10. Film (10, 11) selon la revendication 1, 2, 3, 4, 5, 6, 7, 8 ou 9, **caractérisé en ce que** le film (10, 11) est étiré de manière monoaxiale ou de manière biaxiale selon un degré d'étirage allant de 1,3 à 6 et se rétracte à une température de 75 °C dans une direction d'étirage de 20 à 80 %.

11. Film (10, 11) selon la revendication 1, 2, 3, 4, 5, 6, 7, 8, 9 ou 10, **caractérisé en ce que** le film (10, 11) est étiré de manière monoaxiale ou de manière biaxiale selon un degré d'étirage allant de 1,3 à 6 et se rétracte à une température de 95 °C dans une direction d'étirage de 50 à 85 %.

12. Film (10, 11) selon la revendication 1, 2, 3, 4, 5, 6, 7, 8, 9, 10 ou 11, **caractérisé en ce que** le film (10, 11) est étiré de manière monoxiale ou de manière biaxiale selon un degré d'étirage allant de 1,3 à 6 et présente, à une température de 95 °C, une tension de rétraction inférieure à 12 MPa.

13. Film (10, 11) selon la revendication 1, 2, 3, 4, 5, 6, 7, 8, 9, 10 ou 11, **caractérisé en ce que** le film (10, 11) est étiré de manière monoaxiale ou de manière biaxiale selon un degré d'étirage allant de 1,3 à 6 et présente, à une température de 95 °C, une tension de rétraction inférieure à 8,5 MPa.

14. Film (10, 11) selon la revendication 1, 2, 3, 4, 5, 6, 7, 8, 9, 10, 11, 12 ou 13, **caractérisé en ce que** le film (10, 11) est étiré de manière monoaxiale ou de manière biaxiale selon un degré d'étirage allant de 1,3 à 6 et présente, dans au moins une direction d'étirage, un profil de rétraction et de température S(T) où

$$92,5 + T / (1 + 3,6 \times 10^{-4} \times T^2) < S(T) < 85,8 - 1763 / [23 + (T - 58,3)^2],$$

dans lequel S(T) désigne la rétraction exprimée en pourcentage et T la température exprimée dans l'unité °C.

**15.** Film (10, 11) selon la revendication 1, 2, 3, 4, 5, 6, 7, 8, 9, 10, 11, 12, 13 ou 14, **caractérisé en ce que** le film (10, 11) présente, dans l'état non étiré et dans l'état étiré, un coefficient de frottement par adhérence spécifique mesuré selon la norme DIN EN ISO 8295 inférieur à 0,7 et un coefficient de frottement par glissement spécifique mesuré selon la norme DIN EN ISO 8295 inférieur à 0,6.

**16.** Film (10, 11) selon la revendication 1, 2, 3, 4, 5, 6, 7, 8, 9, 10, 11, 12, 13, 14 ou 15, **caractérisé en ce que** le film (10, 11) est traité d'un côté ou des deux côtés au moyen d'une décharge corona.

10

1, 1A    3, 3A

2, 2A

## Fig. 1

11

1, 1A

4

3, 3A

5

2, 2A

## Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5484632 A
- US 5968666 A